# EUROPÄISCHE PATENTSCHRIFT

(11) **EP 0 517 942 B1**
(45) Veröffentlichungstag und Bekanntmachung des Hinweises auf die Patenterteilung: **12.03.1997**
(21) Anmeldenummer: 91109744.2
(22) Anmeldetag: 13.06.1991
(51) Int. Cl.: H04M 3/42, H04M 1/00

(54) **Verfahren zum Beeinflussen einer in einem Kommunikationsendgerät implementierten Signalisierungsprozedur**
Method for modifying a signalisation procedure implemented in a telecommunication terminal
Procédé de modification d'une procédure de signalisation mise en oeuvre dans un terminal de télécommunication

(43) Veröffentlichungstag der Anmeldung: 16.12.1992
(73) Patentinhaber: SIEMENS AKTIENGESELLSCHAFT, 80333 München (DE)
(72) Erfinder: Wilde, Wolfgang, W-8000 München 70 (DE)

(56) Entgegenhaltungen:
- EP-A- 0 173 264
- EP-A- 0 419 948
- DE-A- 3 112 475
- DE-A- 3 506 910
- US-A- 4 897 866
- PATENT ABSTRACTS OF JAPAN vol. 13, no. 551 (E-857)8. Dezember 1989 & JP-A-1 229 551
- PATENT ABSTRACTS OF JAPAN vol. 8, no. 264 (E-282)4. Dezember 1984 & JP-A-59 134 953

## Beschreibung

Der Verbindungsauf- und -abbau zwischen einer Kommunikationsanlage und einem Kommunikationsendgerät sowie Teilnehmerleistungsmerkmale - z. B. Anrufumleitung - werden in einem Kommunikationsendgerät mit Hilfe einer Signalisierungsprozedur gesteuert. Hierbei wird im Rahmen des Verbindungsauf- bzw. -abbaus oder während der Kommunikationsphase die üblicherweise programmtechnisch realisierte Signalisierungsprozedur durch Tastenbetätigungen beeinflußt, wobei die Beeinflussung vor jeder Verzweigung innerhalb der Signalisierungsprozedur stattfindet. Insbesondere in privaten Kommunikationsnetzen wird - mit zunehmender Tendenz - eine Vielzahl von Teilnehmerleistungsmerkmalen bereitgestellt. Für die Steuerung dieser Teilnehmerleistungsmerkmale ist in den zugehörigen Kommunikationsendgeräten neben der numerischen Tastatur eine Vielzahl von Sondertasten vorgesehen. Derartige Kommunikationsendgeräte sind aus der Produktschrift "ISDN im Büro" der Firma Siemens, Sonderausgabe 'telcom report' und Siemens-Magazin COM, Seite 42, bekannt. Darüberhinaus sind für die Initialisierung und Steuerung der Teilnehmerleistungsmerkmale mannigfaltige Anordnungen bzw. Implementierungen der Sondertasten bekannt. Bei einer dieser Varianten werden - um Tasten und damit Kosten einzusparen - Tasten mehrfach belegt, d. h. den einzelnen Tasten werden mehrere Beeinflussungsmöglichkeiten zugeordnet, wobei die Umschaltung für alle oder gruppenweise durch weitere Sondertasten bewirkt wird.

Des weiteren ist aus der US-Patentschrift 4 659 876 ein "Audiographisches Kommunikationssystem" bekannt, bei dem die Teilnehmerleistungsmerkmale durch Berührung einer berührungsempfindlichen Schicht einer Bildschirmeinrichtung - sogenannte "Touch Screen"-Tasten - initialisiert werden. Bei all diesen Kommunikationsendgeräten ist bei einer Vielzahl von implementierten Teilnehmerleistungsmerkmalen - dies ist insbesondere in privaten Kommunikationsnetzen der Fall - eine Vielzahl von zusätzlichen Sondertasten erforderlich, die in Abhängigkeit von unterschiedlichen Betriebs- und Signalisierungszuständen des Kommunikationsendgerätes zu betätigen sind. Diese Art der Betätigung setzt umfangreiche Kenntnisse, insbesondere hinsichtlich der Signalisierungszustände und der möglichen Betätigungsvarianten voraus. Durch diese umfangreichen Kenntnisse wird die Teilnehmerakzeptanz derartiger Kommunikationsendgeräte erheblich reduziert bzw. die komfortablen Möglichkeiten hinsichtlich der angebotenen Teilnehmerleistungsmerkmale bleiben zumindest teilweise ungenutzt.

In der DE 31 12 475 A1 ist ein Fernsprechapparat beschrieben, bei dem mit Hilfe eines Bedien- und Anzeigefeldes, eines Steuerungs- und Interfacemoduls sowie wenigen zusätzlichen Funktionstasten die Bedienung von Leistungsmerkmalen vereinfacht wird. Die Leistungsmerkmale werden zu vom Bediener des Fernsprechapparates bestimmten Zeitpunkten ausgewählt und abgerufen.

Aus der EP 0 419 948 A2 ist des weiteren ein Verfahren zur Einleitung von vermittlungstechnischen Funktionen und Diensten bekannt, bei dem nach Betätigen einer Sondertaste die Funktionen und Dienste nacheinander aufgerufen und angezeigt werden. Mittels einer weiteren Sondertaste wird eine angezeigte Funktion bzw. angezeigter Dienst ausgewählt und realisiert.

Aus der EP 0 173 264 A2 ist ein Verfahren für die Aktivierung von bestimmten bzw. einigen Leistungsmerkmalen bekannt, bei dem nach einer Signalgabe vom Kommunikationsendgerät zum Kommunikationssystem in Abhängigkeit vom Vorliegen eines bestimmten Vermittlungszustandes mögliche Leistungsmerkmale in einer vorgegebenen zeitlichen Reihenfolge angesagt und mit Hilfe einer Taste oder des Gabelumschalters während der Anzeige des jeweiligen Leistungsmerkmals aktiviert werden können. Eine Signalgabe zu vermittlungstechnisch ungünstigen Zeitpunkten verursacht Störungen insbesondere während einer Kommunikationsbeziehung.

Die Auswahl und Aktivierung von Grundfunktionen und Leistungsmerkmalen bzw. Diensten bei vermittlungstechnischen Zuständen, bei denen eine Aktivierung nicht möglich oder nicht sinnvoll ist, führt bei Lösungen nach der DE 31 12 475 A1 und nach EP 0 419 942 A2 aufgrund von Fehlbedienungen zu Störungen des Kommunikationsendgerätes.

Die der Erfindung zugrundeliegende Aufgabe besteht darin, die Bedienung eines Kommunikationsendgerätes zu optimieren, d.h. weiter zu verbessern. Die Aufgabe wird durch die Merkmale des Anspruchs 1 gelöst.

Der wesentliche Aspekt des erfindungsgemäßen Verfahrens ist darin zu sehen, daß vor jeder Verzweigung der Signalisierungsprozedur in mehrere Signalisierungsteilprozeduren eine erste, eine Signalisierungssteilprozedur bestimmende Prozedursteuerinformation gebildet und an die Anzeigeeinrichtung übermittelt wird. Des weiteren sind im Kommunikationsendgerät zwei Tasten, eine Folgetaste und eine Bestätigungstaste, angeordnet. Erfolgt nach dem Übermitteln der ersten Prozedursteuerinformation an die Anzeigeeinrichtung eine Betätigung der Folgetaste, so wird eine eine weitere Signalisierungsteilprozedur bestimmende Prozedursteuerinformation gebildet und an die Anzeigeeinrichtung übermittelt. Wird dagegen die Bestätigungstaste bestätigt, so wird die durch die der Anzeigeeinrichtung zuletzt zugeführte Prozedursteuerinformation bestimmte Signalisierungsteilprozedur angesteuert und ausgeführt.

Ein wesentlicher Vorteil des erfindungsgemäßen Verfahrens ist darin zu sehen, daß zusätzlich zur numerischen Tastatur lediglich zwei Sondertasten - die Folgetaste und die Bestätigungstaste - für die Steuerung beliebig vieler Teilnehmerleistungsmerkmale erforderlich sind. Ein weiterer wesentlicher Vorteil des erfindungsgemäßen Verfahrens besteht darin, daß keine Kenntnisse über die Abfolge der Tastenbetätigungen erforderlich sind.

Gemäß einer vorteilhaften Ausgestaltung des erfindungsgemäßen Verfahrens werden die erste und die Reihenfolge der weiteren Prozedursteuerinformationen in Abhängigkeit von der Benutzungshäufigkeit der Signalisierungsteilprozeduren gebildet - Anspruch 2. Dies bedeutet, daß Prozedursteuerinformationen, deren zugeordnete Signalisierungsteilprozeduren durch die Bestätigungstaste häufig bestimmt werden, jeweils als erste Prozedursteuerinformation gebildet und der Anzeigeeinrichtung zugeführt werden. Nach Betätigen der Folgetaste wird diejenige Prozedursteuerinformation gebildet, deren zugeordnete Signalisierungsteilprozedur am zweithäufigsten angesteuert wird. Bei weiteren Betätigungen der Folgetaste werden die Prozedursteuerinformationen - wie vorhergehend erläutert - entsprechend der weiteren Häufigkeit der benutzten Signalisierungsteilprozeduren gebildet.

Gemäß weiterer vorteilhafter Ausgestaltungen des erfindungsgemäßen Verfahrens werden die Prozedursteuerinformationen entweder direkt als Programmelemente in die Signalisierungsprozedur eingefügt, wodurch die Benutzungshäufigkeit fest vorgegeben ist - Anspruch 3 -, oder in einer der Signalisierungsprozedur zugeordneten Prozedurspeichereinrichtung hinterlegt. Bei Speicherung der Prozedursteuerinformationen in einer Prozedurspeichereinrichtung sind vor jeder Verzweigung in der Signalisierungsprozedur Speicheradressen angegeben, mit deren Hilfe jeweils die adressierten Speicherbereiche gelesen und die gelesenen Prozedursteuerinformationen an die Anzeigeeinrichtung übermittelt werden - Anspruch 4. In die bzw. von der Prozedurspeichereinrichtung können die Prozedursteuerinformationen mit Hilfe einer Speicherzugriffsprozedur geschrieben bzw. gelesen werden. Besonders vorteilhaft werden die Prozedursteuerinformationen- z. B. während einer Inbetriebnahme des Kommunikationsendgerätes oder während des Betriebs, um die Prozedursteuerinformationen beispielsweise in einer anderen Landessprache anzuzeigen - mit Hilfe einer Übertragungsprozedur von der Kommunikationsanlage zum Kommunikationsendgerät übertragen und in den vorgegebenen Speicherbereichen der Prozedurspeichereinrichtung hinterlegt ("Downloading" von Prozedursteuerinformationen)- Anspruch 5.

Gemäß einer weiteren vorteilhaften Weiterbildung des erfindungsgemäßen Verfahrens können in der Kommunikationsanlage unterschiedliche Benutzungshäufigkeiten repräsentierende Gruppen von Prozedursteuerinformationen gespeichert sein. Eine vorgegebene Gruppe von Prozedursteuerinformationen wird hierbei bei der Inbetriebnahme des Kommunikationsendgerätes an dieses als sogenannte "Standard"-Gruppe übermittelt. Eine weitere Gruppe bzw. eine weitere Benutzungshäufigkeit repräsentierende Gruppe von Prozedursteuerinformationen kann durch eine entsprechende Signalisierung vom Kommunikationsendgerät - durch den Teilnehmer initialisiert - ausgewählt werden. Die ausgewählte Gruppe von Prozedursteuerinformationen wird ebenfalls mit Hilfe der Übertragungsprozedur zum Kommunikationsendgerät übertragen und in den vorgegebenen Speicherbereichen der Prozedurspeichereinrichtung gespeichert - Anspruch 6.

Nach einer weiteren vorteilhaften Ausgestaltung des erfindungsgemäßen Verfahrens sind die unterschiedlichen Gruppen von Prozedursteuerinformationenin unterschiedlichen vorgegebenen Speicherbereichen der Kommunikationsendgeräte speicherbar. Die Auswahl der Gruppen erfolgt wiederum durch eine entsprechende Signalisierung - durch den Teilnehmer initialisiert - am Kommunikationsendgerät - Anspruch 7. Hierbei werden die unterschiedlichen Speicherbereiche der Prozedurspeichereinrichtung durch unterschiedliche Berechnungen der Speicheradressen angesteuert, wobei die unterschiedlichen Berechnungen durch die Signalisierung eingestellt werden.

Eine zusätzliche vorteilhafte Weiterbildung des erfindungsgemäßen Verfahrens besteht darin, vor jeder Verzweigung der Signalisierungsprozedur in mehrere Signalisierungsteilprozeduren die erste und zumindest eine weitere Prozedursteuerinformation zu bilden und an eine für die Visualisierung zumindest der ersten und einer weiteren Prozedursteuerinformation ausgebildete Anzeigeeinrichtung zu übermitteln. Die Prozedursteuerinformationen werden in der Anzeigeeinrichtung, beispielsweise zeilenweise oder auch spaltenweise, angezeigt. Um die Teilnehmerverständlichkeit der Prozedursteuerinformationen zu erhöhen, können die Prozedursteuerinformationen vor einer Übermittlung an die Anzeigeeinrichtung in teilnehmerverständlichere, beispielsweise verständlichere Textinformationen oder unterschiedliche Sprachinformationen - z. B. in unterschiedliche Landessprachen -, umgesetzt werden.

Im folgenden wird das erfindungsgemäße Verfahren anhand von Zeichnungen und eines Ablaufdiagrammes erläutert. Dabei zeigen
- FIG 1: die Bedieneroberfläche eines Kommunikationsendgerätes,
- FIG 2: in einem Blockschaltbild die wesentlichen Schaltungskomponenten eines Kommunikationsendgerätes, und
- FIG 3: ein Ablaufdiagramm eines Abschnittes der Signalisierungsprozedur.

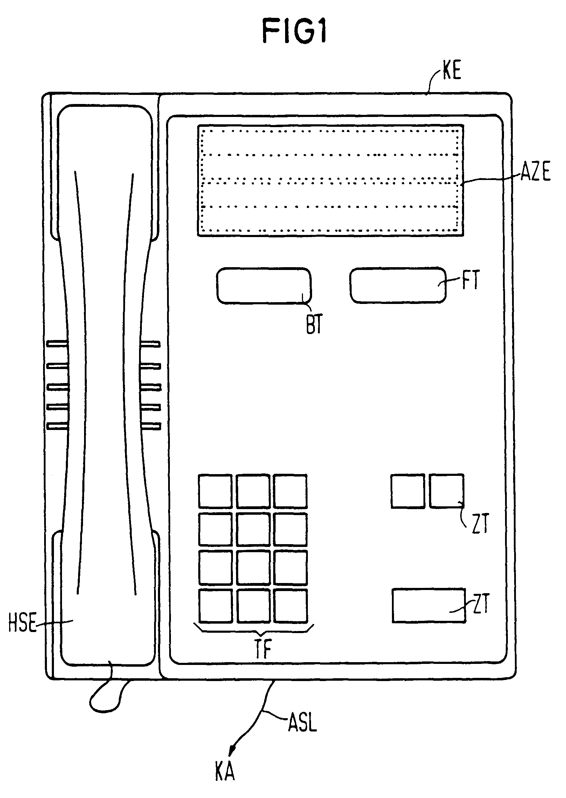

FIG 1 zeigt die Draufsicht auf ein Kommunikationsendgerät KE mit einer aufgelegten Hör-/Sprecheinrichtung HSE. Für die Anzeige von Wahlinformationen, Uhrzeitinformationen, Texten und von Prozedursteuerinformationen ist eine Anzeigeeinrichtung AZE vorgesehen. Diese Anzeigeeinrichtung AZE ist beispielsweise durch eine LCD-Display (vier Zeilen à 24 Zeichen) realisiert. Hierbei werden beispielsweise die kommunikationssystemrelevanten Informationen, wie Wahlinformationen, Uhrzeitinformationen, usw., in den ersten zwei Anzeigezeilen und die Prozedursteuerinformation in den zweiten zwei Anzeigezeilen dargestellt. Des weiteren ist für die Eingabe von numerischen Informationen, z. B. Wahlinformationen, ein Tastenfeld vorgesehen. Dieses Tastenfeld TF enthält die nicht im einzelnen dargestellten numerischen Tasten. Des weiteren sind zusätzliche Tasten ZT vorgesehen, mit deren Hilfe beispielsweise ein eingebauter Lautsprecher aktiviert oder dessen Lautstärke geregelt wird oder der Kontrast der Anzeigeeinrichtung AZE einstellbar ist. Des weiteren ist eine Bestätigungstaste BT und eine Folgtetaste FT angeordnet. Das Kommunikationsendgerät KE ist über eine Anschlußleitung ASL mit einer Kommunikationsanlage KA verbunden.

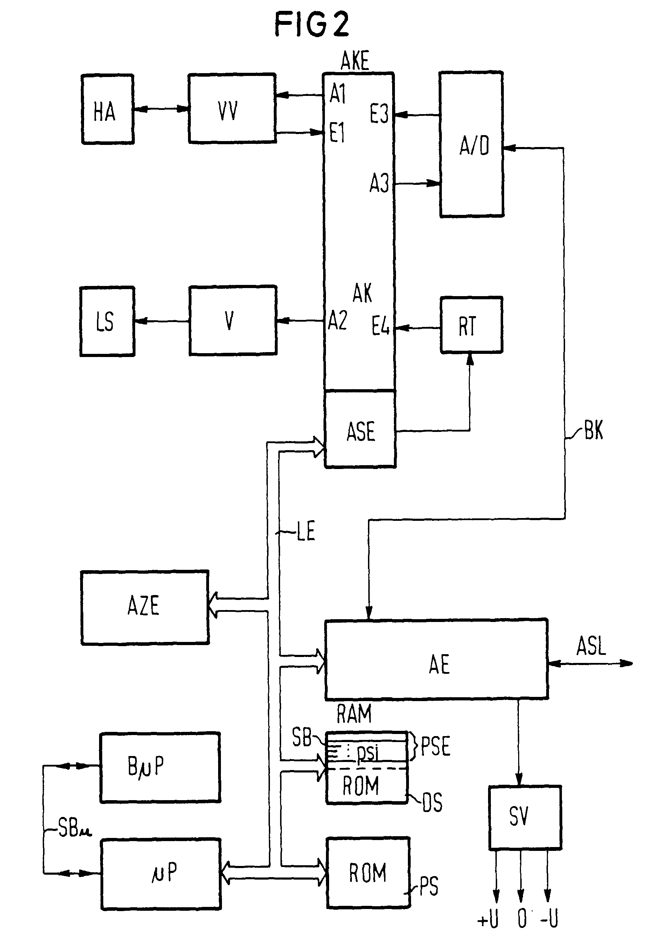

FIG 2 zeigt ein Hardwareblockschaltbild eines Kommunikationsendgerätes KE. Die zentrale Einrichtung zur Steuerung der Signalisierungsprozedur sowohl intern als auch mit der Kommunikationsanlage KA ist durch ein Mikroprozessorsystem µP realisiert. Beispielsweise kann dieses Mikroprozessorsystem µP durch einen Siemens-Mikroprozessor SAB8OC31 gebildet sein. Über einen durch Steuer-, Adreß- und Datenleitungen gebildeten lokalen Bus LB ist das Mikroprozessorsystem µP mit einem Programmspeicher PS und einem Datenspeicher DS verbunden. Der in ROM-Speicher-Technik realisierte Programmspeicher PS ist beispielsweise für ein maximal 64 kByte umfassendes Programm ausgelegt. Der ebenfalls beispielsweise 64 kByte umfassende Datenspeicher kann zur Hälfte einen in ROM-Speicher-Technik ausgeführten Festspeicher - für Festdaten, Parameter, Daten und Tabellen - und zur anderen Hälfte einen in RAM-Speicher-Technik ausgeführten Speicher - beispielsweise zur Speicherung von Prozedursteuerinformationen psi - enthalten. Hierbei ist für jede Prozedursteuerinformation psi ein separater Speicherbereich SB vorgesehen, wobei die Speicherbereichgröße gemäß dem Ausführungsbeispiel auf einen Informationsumfang abgestimmt ist, die einer zweizeiligen Anzeige in der Anzeigeeinrichtung AZE entspricht. Die Speicherbereiche SB stellen Teilspeicherbereiche einer Prozedurspeichereinrichtung PSE dar. Das Mikroprozessorsystem µP weist zusätzlich eine serielle Busschnittstelle auf. Diese serielle Busschnittstelle ist über einen seriellen Bus SBµ mit einem Bedienfeld-Mikroprozessorsystem BµP verbunden. In dem Bedienfeld-Mikroprozessorsystem BµP werden die von den im Kommunikationsendgerät KE angeordneten Tasten erzeugten codierten Informationen erkannt, über den seriellen Bus SBµ zum Mikroprozessorsystem µP seriell übertragen und dort Signalisierungsinformationen bzw. Prozedursteuerinformationen psi und Bedienerführungsinformationen - beispielsweise für Anzeigen in einer Anzeigeeinrichtung - gebildet. Des weiteren ist an dem lokalen Bus LB eine Anzeigeeinrichtung AZE - wie bereits erläutert - angeschlossen.

Das Kommunikationsendgerät ist über eine Anschalteeinrichtung AE mit einer Teilnehmeranschlußleitung ASL verbunden. Über diese Teilnehmeranschlußleitung ASL kommuniziert das Kommunikationsendgerät KE mit einer Kommunikationsanlage KA. Über die Teilnehmeranschlußleitung ASL werden die 64 kByte/s umfassenden Nachrichten und die 8 kByte/s umfassenden Signalisierungsinformationen bidirektional übermittelt. Die im Signalisierungskanal übermittelten Signalisierungsinformationen sind entsprechend dem OSI-Referenzmodell strukturiert. Von den sieben abstrahierten Protokollschichten des OSI-Referenzmodells sind die unteren drei Protokollschichten realisiert. Die in der Anschlußeinrichtung AE über die Anschlußleitung ASL übermittelten Signalisierungsinformationen werden lokal-busgemäß aufbereitet und über den lokalen Bus LB an das Mikroprozessorsystem µP übermittelt. Im Mikroprozessorsystem µP werden diese Signalisierungsinformationen gemäß der dort programmtechnisch implementierten Signalisierungsprozedur weiterverarbeitet und die entsprechenden kommunikationsendgeräteindividuellen Reaktionen initialisiert. Die in der Anschlußeinrichtung AE abgetrennten Nachrichteninformationen gelangen über eine entsprechende Verbindung BK an eine Analog-/Digital-Umsetzeinrichtung A/D. In dieser werden aus den von der Anschlußeinrichtung AE abgegebenen digitalisierten Nachrichten- bzw. Sprachsignalen analoge Sprachsignale gebildet. Die an einem weiteren Eingang der Analog-/Digital-Umsetzeinrichtung A/D ankommenden analogen Sprachsignale werden in digitale Sprachsignale umgesetzt. Die analogen Sprachsignale gelangen über eine entsprechende Verbindung zu einem dritten Eingang E3 einer Akustikeinrichtung AKE. Die Akustikeinrichtung AKE setzt sich aus einem Akustikkoppler AK und einer Ansteuereinrichtung ASE zusammen. Durch den Akustikkoppler AK werden die von der Analog-/Digital-Umsetzeinrichtung A/D ankommenden analogen Signale entweder nur an einen ersten Ausgang A1 oder an den ersten und einen zweiten Ausgang A1, A2 vermittelt. Ausgang A1 ist über einen Vorverstärker VV mit dem Handapparat des Kommunikationsendgerätes KE verbunden. Die analogen Sprachsignale werden in jedem Fall nach Durchschalten der Verbindung über den Vorverstärker VV an eine im Handapparat HA angeordnete Hörmuschel geführt. Analog hierzu gelangen die von einem im Handapparat HA angeordneten Mikrophon abgegebenen Sprachsignale über den Vorverstärker VV an einen ersten Eingang E1 des Akustikkopplers AK. Die analogen Sprachsignale werden durch den Akustikkoppler AK an einen mit der Analog-/Digital-Umsetzeinrichtung A/D verbundenen dritten Ausgang A3 vermittelt. Diese analogen Sprachsignale werden in der Analog-/Digital-Umsetzeinrichtung A/D in digitale Signale umgesetzt und in der Anschlußeinrichtung AE in den zur Anschlußleitung ASL übermittelnden Nachrichtenstrom eingefügt. Ist im Kommunikationsendgerät KE das Leistungsmerkmal "Lauthören" durch beispielsweise einen entsprechenden Tastenanreiz aktiviert, so werden die am dritten Eingang E3 ankommenden analogen Sprachsignale gleichzeitig zu einem zweiten Ausgang A2 des Akustikkopplers AK geführt. Von dort gelangen die analogen Sprachsignale über einen Verstärker V zu einem im Kommunikationsendgerät angeordneten Lautsprecher LS. Die in der Akustikeinrichtung AKE angeordnete Ansteuereinrichtung ASE ist sowohl mit dem Akustikkoppler AK als auch mit dem lokalen Bus LB verbunden. In dieser Ansteuereinrichtung ASE werden die vom Mikroprozessorsystem µP über den lokalen Bus LB übermittelten Steuerbefehle in Informationen umgesetzt, durch die die Verbindungswege im Akustikkoppler AK eingestellt werden. Der Akustikkoppler AK ist beispielsweise durch in CMOS-Technik ausgeführte analoge Koppelpunkte realisiert. Zusätzlich steuert die Ansteuereinrichtung ASE einen Ruftongenerator RT, der je nach Ansteuerung unterschiedliche Ruftöne mit entsprechenden Rufrhythmen erzeugt. Diese Ruftöne werden über den Akustikkoppler AK unter Steuerung der Ansteuereinrichtung ASE an den Handapparat HA und/oder den Lautsprecher LS vermittelt.

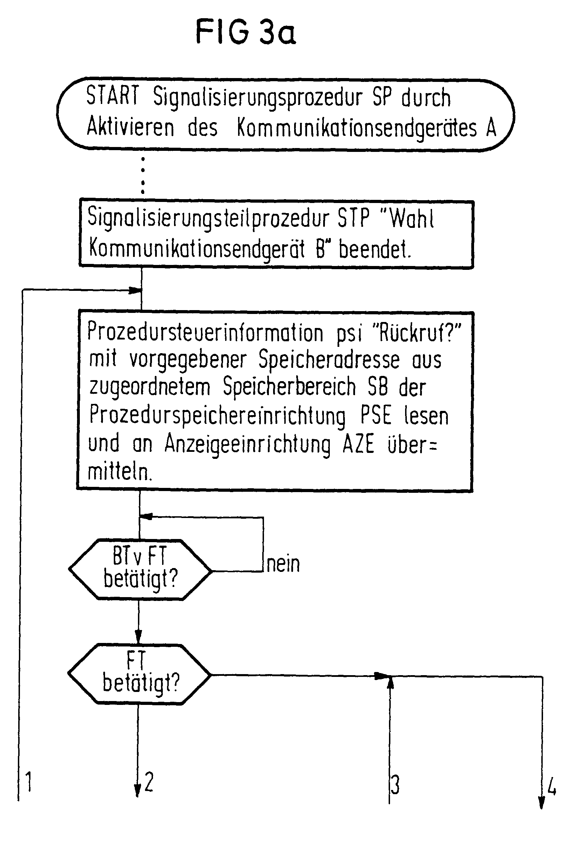

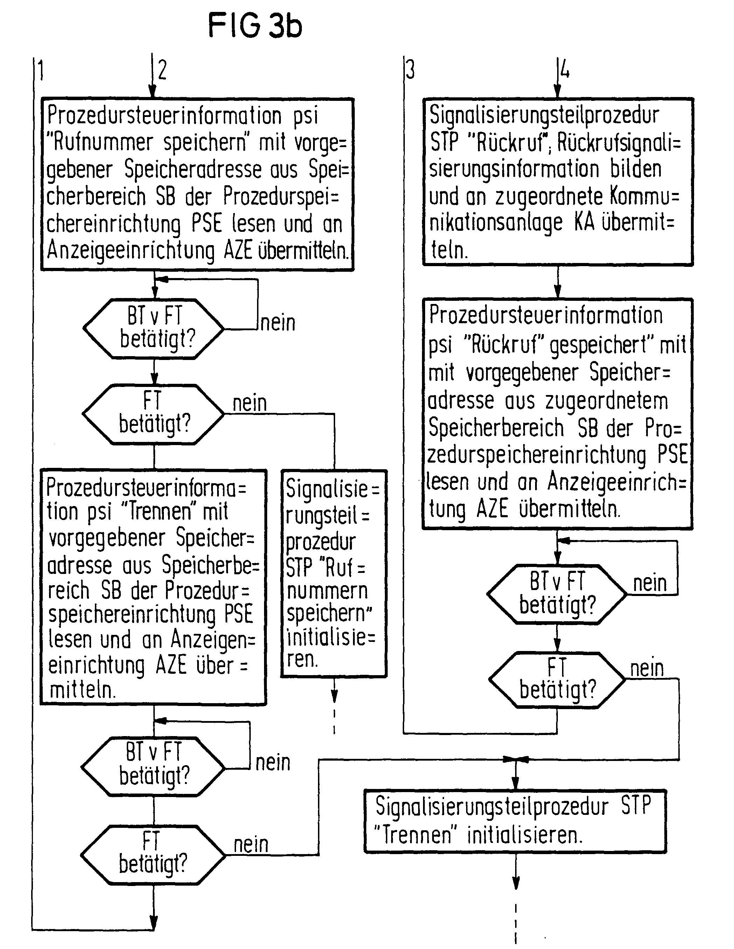

In FIG 3 ist ein im wesentlichen sich selbst erläuterndes Ablaufdiagramm eines Abschnittes der Signalisierungsprozedur SP dargestellt. Nach dem Start der Signalisierungsprozedur SP durch Aktivieren eines Kommunikationsendgerätes 'A' - z. B. Hör-/Sprecheinrichtung HSE wird abgenommen - sei für das Ausführungsbeispiel angenommen, daß die Signalisierungsteilprozedur STP "Wahl Kommunikationsendgerät B" beendet ist. Des weiteren sei angenommen, daß das Kommunikationsendgerät 'B' nicht aktiviert wird, d. h. zu Teilnehmer 'B' kann keine Verbindung hergestellt werden. An dieser Stelle ist nun eine Verzweigung der Signalisierungsprozedur in Signalisierungsteilprozeduren STP "Rückruf", "Rufnummer speichern" oder "Verbindung trennen" möglich. Aufgrund empirischer Messungen wurde festgestellt, daß bei dieser Verzweigung die Signalisierungsteilprozedur STP "Rückruf" am häufigsten, die Signalisierungsteilprozedur STP "Rufnummer speichern" am zweithäufigsten und die Signalisierungsteilprozedur STP "Verbindung trennen" am wenigsten benutzt wird. Demzufolge wird die Prozedursteuerinformation psi "Rückruf?" zuerst durch Auslesen dieser Information aus der Prozedurspeichereinrichtung PSE gebildet und an die Anzeigeeinrichtung AZE übermittelt. In Abhängigkeit von dem Betätigen der Bestätigungstaste BT oder der Folgetaste FT wird die Signalisierungsteilprozedur STP "Rückruf" initialisiert und die folgende Verzweigung der Signalisierungsprozedur SP angesteuert oder eine weitere Prozedursteuerinformation psi "Rufnummer speichern" wiederum durch Lesen dieser Information aus der Prozedurspeichereinrichtung PSE gebildet und an die Anzeigeeinrichtung AZE übertragen. Nach Betätigen der Folgetaste FT wird in Abhängigkeit von einem erneuten Betätigen der Bestätigungstaste BT oder der Folgetaste FT entweder die Signalisierungsteilprozedur STP "Rufnummer speichern" initialisiert und die folgende Verzweigung der Signalisierungsprozedur SP angesteuert oder eine weitere Prozedursteuerinformation psi "Verbindung trennen" durch Lesen dieser Prozedursteuerinformation psi aus der Prozedurspeichereinrichtung PSE gebildet und an die Anzeigeeinrichtung AZE übermittelt. Nach einem weiteren Betätigen der Folgetaste FT wird wiederum in Abhängigkeit vom Betätigen der Bestätigungstaste BT oder der Folgetaste FT entweder die Signalisierungsteilprozedur STP "Verbindung trennen" initialisiert und die folgende Verzweigung der Signalisierungsprozedur SP angesteuert oder erneut die Prozedursteuerinformation psi "Rückruf?" gebildet und an die Anzeigeeinrichtung AZE übermittelt. Die in FIG 3 dargestellte Bildung von Prozedursteuerinformationen psi sowie die weitere Verzweigung der Signalisierungsprozedur SP in die Signalisierungsteilprozeduren STP in Abhängigkeit von dem Betätigen der Bestätigungstaste BT und der Folgetaste FT ist repräsentativ für alle Verzweigungen innerhalb der Signalisierungsprozedur SP dargestellt. Lediglich die Anzahl und die Art der Signalisierungsteilprozeduren STP ist an den weiteren Verzweigungen der Signalisierungsprozedur SP unterschiedlich.

## Patentansprüche

1. Verfahren zum Beeinflussen einer in einem Kommunikationsendgerät (KE) implementierten Signalisierungsprozedur (SP), wobei ein Verbindungsauf- bzw. -abbau zwischen dem Kommunikationsendgerät (KE) und einem mit diesem verbundenen Kommunikationssystem (KA) sowie die Leistungsmerkmalsteuerungen im Rahmen des Verbindungsauf- und -abbaus und während der Kommunikationsphase durch die programmtechnisch realisierte und durch Tastenbetätigungen beeinflußbare Signalisierungsprozedur (SP) gesteuert werden,
- bei dem nach jedem Aktivieren des an ein Kommunikationssystem (KA) angeschlossenen Kommunikationsendgerätes (KE) vor jeder Verzweigung der Signalisierungsprozedur (SP) in mehrere Signalisierungsteilprozeduren (STP) eine erste, eine Signalisierungsteilprozedur (STP) bestimmende Prozedursteuerinformation (psi) gebildet und im Sinne einer Visualisierung zumindest einer Prozedursteuerinformation (psi) an eine Anzeigeeinrichtung (AZE) übermittelt wird,
- bei dem nach Betätigen einer im Kommunikationsendgerät (KE) angeordneten Folgetaste (FT) eine eine weitere Signalisierungsteilprozedur (STP) bestimmende Prozedursteuerinformation (psi) gebildet und an die Anzeigeeinrichtung (AZE) gesteuert wird, und
- bei dem nach Betätigen einer im Kommunikationsendgerät (KE) angeordneten Bestätigungstaste (BT) die der durch die der Anzeigeeinrichtung (AZE) zuletzt zugeführte Prozedursteuerinformation (psi) bestimmte Signalisierungsteilprozedur (STP) angesteuert und ausgeführt wird.

2. Verfahren nach Anspruch 1,
**dadurch gekennzeichnet,**
daß die erste und die Reihenfolge der weiteren Prozedursteuerinformationen (psi) in Abhängigkeit von der Benutzungshäufigkeit der Signalisierungsteilprozeduren (STP) gebildet werden.

3. Verfahren nach Anspruch 1 oder 2,
**dadurch gekennzeichnet,**
daß die Prozedursteuerinformationen (psi) in der Signalisierungsprozedur (SP) als vorgegebene Programmelemente realisiert sind.

4. Verfahren nach Anspruch 1 oder 2,
**dadurch gekennzeichnet,**
daß die Prozedursteuerinformationen (psi) in vorgegebenen Speicherbereichen (SB) der der Signalisierungsprozedur (SP) zugeordneten Prozedurspeichereinrichtung (PSE) gespeichert sind und daß in der Signalisierungsprozedur (SP) vor jeder Verzweigung Speicheradressen angegeben sind, mit deren Hilfe jeweils die Prozedursteuerinformationen (psi) enthaltenden Speicherbereiche (SB) gelesen und die gelesenen Prozedursteuerinformationen (psi) an die Anzeigeeinrichtung (AZE) übermittelt werden.

5. Verfahren nach Anspruch 4,
**dadurch gekennzeichnet,**
daß die Prozedursteuerinformationen (psi) mit Hilfe einer Übertragungsprozedur vom Kommunikationssystem (KA) zum Kommunikationsendgerät (KE) übermittelt und in den vorgegebenen Speicherbereichen (SB) der Prozedurspeichereinrichtung (PSE) gespeichert werden.

6. Verfahren nach Anspruch 4,
**dadurch gekennzeichnet,**
daß in der Kommunikationsanlage (KA) unterschiedliche Benutzungshäufigkeiten repräsentierende Gruppen von Prozedursteuerinformationen (psi) gespeichert sind, daß bei der Inbetriebnahme eines Kommunikationsendgerätes (KE) eine vorgegebene Gruppe von Prozedursteuerinformationen (psi) von der Kommunikationsanlage (KA) an das jeweilige Kommunikationsendgerät (KE) übermittelt wird, daß durch eine im Kommunikationsendgerät (KE) initialisierte und zur Kommunikationsanlage (KA) wirkende Signalisierung eine andere Gruppe von Prozedursteuerinformationen (psi) auswählbar ist und daß die ausgewählte Gruppe mit Hilfe einer Übertragungsprozedur an das jeweilige Kommunikationsendgerät (KE) übertragen und dort in den vorgegebenen Speicherbereichen (SB) der Prozedurspeichereinrichtung (PSE) gespeichert wird.

7. Verfahren nach Anspruch 6,
**dadurch gekennzeichnet,**
daß die Gruppen von Prozedursteuerinformationen (psi) in unterschiedlichen, vorgegebenen Speicherbereichen (SB) der Prozedurspeichereinrichtung (PSE) der Kommunikationsendgeräte (KE) gespeichert sind, daß die Ansteuerung der unterschiedlichen Speicherbereiche (SB) durch eine Signalisierung am Kommunikationsendgerät (KE) eingestellt wird, wobei die Ansteuerung durch unterschiedliche Speicheradressenberechnungen bewirkt wird.

8. Verfahren nach mindestens einem der vorhergehenden Ansprüche,
**dadurch gekennzeichnet,**
daß vor jeder Verzweigung der Signalisierungsprozedur (SP) in mehrere Signalisierungsteilprozeduren (STP) die erste und zumindest eine weitere Prozedursteuerinformation (psi) gebildet und an eine für die Visualisierung zumindest der ersten und einer weiteren Prozedursteuerinformation (psi) ausgebildete Anzeigeeinrichtung (AZE) übermittelt wird.

## Claims

1. Method for influencing a signalling procedure (SP) implemented in a telecommunications terminal (KE), a connection set-up or tear-down between the telecommunications terminal (KE) and a telecommunications system (KA) connected thereto as well as the performance feature controls being controlled within the scope of the connection set-up and tear-down and during the communication phase by the signalling procedure (SP) which is realized by programming means and can be influenced by activating keys,
- in which method a first item of procedure control information (psi) which determines a signalling sub-procedure (STP) is formed after each activation of the telecommunications terminal (KE), connected to a telecommunications system (KA), before each branching of the signalling procedure (SP) into a plurality of signalling sub-procedures (STP), and, in order to visualize at least one item of procedure control information (psi), the said item of procedure control information (psi) is transmitted to a display device (AZE),
- in which method an item of procedure control information (psi) which determines a further signalling sub-procedure (STP) is formed after a sequence key (FT) which is arranged in the telecommunications terminal (KE) is activated, and the said item of procedure control information (psi) is transmitted to the display device (AZE), and
- in which method the signalling sub-procedure (STP) which is determined by the item of procedure control information (psi) which is the last to be fed to the display device (AZE) is triggered and executed after an actuation key (BT) arranged in the telecommunications terminal (KE) is activated.

2. Method according to Claim 1, characterized in that the first item of procedure control information (psi) and the sequence of further items of procedure control information (psi) are formed as a function of the frequency of use of the signalling sub-procedures (STP).

3. Method according to Claim 1 or 2, characterized in that the procedure control information (psi) is realized in the signalling procedure (SP) as prescribed programme elements.

4. Method according to Claim 1 or 2, characterized in that the procedure control information (psi) is stored in prescribed memory areas (SB) of the procedure memory device (PSE) which is assigned to the signalling procedure (SP), and in that memory addresses are indicated in the signalling procedure (SP) before each branching, with the aid of which memory addresses memory areas (SB) in each case containing the procedure control information (psi) are read and the procedure control information (psi) which has been read is transmitted to the display device (AZE).

5. Method according to Claim 4, characterized in that the procedure control information (psi) is transmitted from the telecommunications system (KA) to the telecommunications terminal (KE) with the aid of a transmission procedure and is stored in the prescribed memory areas (SB, of the procedure memory device (PSE).

6. Method according to Claim 4, characterized in that groups of items of procedure control information (psi) which represent different frequencies of use are stored in the telecommunications system (KA), in that when a telecommunications terminal (KE) is started up a prescribed group of items of procedure control information (psi) is transmitted from the telecommunications system (KA) to the respective telecommunications terminal (KE), in that another group of items of procedure control information (psi) can be selected by means of a signalling operation which is initialized in the telecommunications terminal (KE) and acts in respect of the telecommunications system (KA), and in that the selected group is transmitted to the respective telecommunications terminal (KE) with the aid of a transmission procedure and is stored therein in the prescribed memory areas (SB) of the procedure memory device (PSE).

7. Method according to Claim 6, characterized in that the groups of items of procedure control information (psi) are stored in different, prescribed memory areas (SB) of the procedure memory device (PSE) of the telecommunications terminals (KE), in that the actuation of the different memory areas (SB) is set by means of a signal operation at the telecommunications terminal (KE), the actuation being effected by means of different memory address calculations.

8. Method according to at least one of the preceding claims, characterized in that the first and at least one further item of procedure control information (psi) are formed before each branching of the signalling procedure (SP) into a plurality of signalling sub-procedures (STP) and the said further item of procedure control information (psi) is transmitted to a display device (AZE) which is designed for the visualization of at least the first and of one further item of procedure control information (psi).

## Revendications

1. Procédé pour influencer une procédure (SP) de signalisation mise en oeuvre dans un terminal (KE) de communication, dans lequel on commande l'établissement ou la suppression d'une communication entre le terminal (KE) de communication et un système (KA) de communication relié à ce terminal ainsi que les commandes de facilités offertes aux abonnés au cours de l'établissement et de la suppression de la communication et pendant la phase de communication par la procédure (SP) de signalisation réalisée de manière programmée et pouvant être influencée par des actionnements de touches,
- dans lequel on forme, après chaque activation du terminal (KE) de communication connecté à un système (KA) de communication, avant chaque bifurcation de la procédure (SP) de signalisation en plusieurs procédures (STP) partielles de signalisation, une première information (psi) de commande de procédure déterminant une procédure (STP) partielle de signalisation et on la transmet, en vue de visualiser au moins une information (psi) de commande de procédure, à un dispositif (AZE) d'affichage,
- dans lequel on forme, après actionnement d'une touche (FT) de suite disposée dans le terminal (KE) de communication, une information (psi) de commande de procédure déterminant une procédure (STP) partielle de signalisation supplémentaire et on la transmet au dispositif (AZE) d'affichage, et
- dans lequel on commande et on met en oeuvre, après actionnement d'une touche (BT) de confirmation disposée dans le terminal (KE) de communication, la procédure (STP) partielle de signalisation déterminée par l'information (psi) de commande de procédure envoyée en dernier au dispositif (AZE) d'affichage.

2. Procédé suivant la revendication 1,
caractérisé en ce que l'on forme la première information de commande de procédure et la succession des informations (psi) supplémentaires de commande de procédure en fonction de la fréquence d'utilisation des procédures (STP) partielle de signalisation.

3. Procédé suivant la revendication 1 ou 2,
caractérisé en ce que l'on réalise les informations (psi) de commande de procédure dans la procédure (SP) de signalisation en tant qu'éléments prescrits de programme.

4. Procédé suivant la revendication 1 ou 2,
caractérisé en ce que les informations (psi) de commande de procédure sont mémorisées dans des zones (SB) de mémoire prescrites du dispositif (PSE) à mémoire de procédure associé à la procédure (SP) de signalisation et il est indiqué dans la procédure (SP) de signalisation, avant chaque bifurcation, des adresses en mémoire, à l'aide desquelles on lit les zones (SB) de mémoire contenant des informations (psi) de commande de procédure et à l'aide desquelles on transmet les informations (psi) de commande de procédure lues au dispositif (AZE) d'affichage.

5. Procédé suivant la revendication 4,
caractérisé en ce que l'on transmet les informations (psi) de commande de procédure à l'aide d'une procédure de transmission du système (KA) de communication au terminal (KE) de communication et on les mémorise dans les zones (SB) de mémoire prescrites du dispositif (PSE) à mémoire de procédure.

6. Procédé suivant la revendication 4,
caractérisé en ce qu'il est mémorisé dans l'installation (KA) de communication des groupes d'informations (psi) de commande de procédure représentant des fréquences différentes d'utilisation, on transmet, lors de la mise en service d'un terminal (KE) de communication, un groupe prescrit d'informations (psi) de commande de procédure de l'installation (KA) de communication au terminal (KE) de communication considéré, on peut sélectionner, par une signalisation déclenchée dans le terminal (KE) de communication et agissant sur l'installation (KA) de communication, un autre groupe d'informations (psi) de commande de procédure, on transmet le groupe sélectionné à l'aide d'une procédure de transmission au terminal (KE) de communication considéré et on l'y mémorise dans les zones (SB) de mémoire prescrites du dispositif (PSE) à mémoire de procédure.

7. Procédé suivant la revendication 6,
caractérisé en ce que les groupes d'informations (psi) de commande de procédure sont mémorisés dans des zones (SB) de mémoire prescrites différentes du dispositif (PSE) à mémoire de procédure des terminaux (KE) de communication et la commande des différentes zones (SB) de mémoire est réglée par une signalisation sur le terminal (KE) de communication, la commande étant provoquée par différents calculs d'adresses en mémoire.

8. Procédé suivant au moins l'une des revendications précédentes,
caractérisé en ce que l'on forme avant chaque bifurcation de la procédure (SP) de signalisation en plusieurs procédures (STP) partielles de signalisation, la première information de commande de procédure et au moins une information (psi) supplémentaire de commande de procédure et on les transmet à un dispositif (AZE) d'affichage formé pour la visualisation d'au moins la première information de commande de procédure et d'une information (psi) supplémentaire de commande de procédure.
